# EUROPEAN PATENT APPLICATION

(11) **EP 2 787 162 A1**
(43) Date of publication of application: **08.10.2014**
(21) Application number: 14163595.3
(22) Date of filing: 04.04.2014
(51) Int. Cl.: E06B 9/68, H05B 37/02

(54) **Dynamic facade system consisting of controllable windows, automated shades and dimmable electric lights**

(30) Priority: 04.04.2013 US 201361808367 P
(71) Applicant: Sage Electrochromics, Inc., Faribault, MN 55021 (US); Lutron Electronics Company, Inc., Doylestown PA 18902 (US)
(72) Inventor: Hakkarainen, Pekka, Doylestown, PA Pennsylvania 18902 (US); Sanders, Helen, Faribault, MN Minnesota 55021 (US); Greer, Bryan D., Northfield, MN Minnesota 55057 (US)
(74) Representative: Clark, Jane Anne

(57) **Abstract**

The disclosure of the present invention provides for a process for controlling the environmental settings of a building, including: providing a building management system (100) capable of controlling one or more electrochromic devices (210) at least one of (a) one or more automated window shades (230), and (b) one or more dimmable electric lights (220); receiving, at the building management system, a plurality of inputs related to (a) a time of day, (b) an occupancy status of the building, (c) a presence of a glare condition, and (d) an operating mode of an HVAC system of the building; and controlling, at the building management system, the status of at least one of the window shades, the lights and the electrochromic devices based on at least one of the plurality of inputs.

## Description

### CROSS-REFERENCE TO RELATED APPLICATIONS

The present application claims the benefit of the filing date of U.S. Provisional Patent Application Serial No. 61/808,367, filed April 4, 2013, the disclosure of which is hereby incorporated herein by reference in its entirety.

### BACKGROUND

The present application relates to control systems for controlling the environmental settings of a building, and methods of operating same.

Several components of a building's façade can contribute to the environmental settings of a building, or rooms in a building. For instance, opening and closing the window shades in a room can influence the brightness and temperature of the room. Likewise, turning on a light can affect the room's brightness, as can tinting a window to reduce the visible light transmissivity of the window.

It is well known how to control each of the above listed components in an automated fashion. For instance, U.S. Patent No. 8,666,555 describes a control system having lighting and automated shades, and U.S. Patent No. 8,288,981 and U.S. Patent Application No. 2007/0211447 describe protocols for controlling sun glare and illumination in a room, respectively. However, to better regulate environmental settings of a room, it is desirable to combine some or all of these components into a single streamlined automated process. Furthermore, in order to make such streamlining quick and efficient, it is desirable to set up processes that rely on efficient sequences of operations or setting determinations.

### SUMMARY

One aspect of the present disclosure provides a process for controlling the environmental settings of a building having one or more windows, including: providing a building management system capable of controlling each of (a) one or more automated window shades associated with the one or more windows, (b) one or more dimmable electric lights, and (c) one or more electrochromic devices associated with the one or more windows; receiving, at the building management system, a plurality of inputs related to (a) a time of day, (b) an occupancy status of the building, (c) a presence of a glare condition, and (d) an operating mode of an HVAC system of the building; and controlling, at the building management system, the status of at least one of the window shades, the lights and the electrochromic devices based on at least one of the plurality of inputs.

In some examples of the disclosure, each of the plurality of inputs may be determined by the building management system. Controlling the status of at least one of the window shades, the lights and the electrochromic device based on at least one of the inputs relating to an occupancy status of the building, a presence of a glare condition and an operating mode of an HVAC system of the building may be at least partially influenced by the determination of the time of day input. The status of at least one of the window shades, the lights and the electrochromic device may not be controlled based on the input relating to the presence of a glare condition when the building management system determines that the time of day is nighttime. In some examples, the status of at least one of the window shades, the lights and the electrochromic device may not be controlled based on the input relating to the presence of a glare condition when the building management system determines that the occupancy status is vacant.

Also in some examples, controlling the status of at least one of the window shades, the lights and the electrochromic device based on the input relating to an operating mode of an HVAC system of the building may be at least partially influenced by the determination of the input relating to occupancy status of the building only when the time of day input indicates that the time of day is daytime. Alternatively, when the time of day input indicates that the time of day is nighttime, controlling the status of at least one of the window shades, the lights and the electrochromic device based on the input relating to an occupancy status of the building may not be influenced by the determination of the input relating to HVAC system of the building only when the time of day input indicates that the time of day is nighttime.

The building management system may be one of a lighting control system, a window shade control system, and a dynamic glazing control system. The building management system may include at least one of a lighting control system, a window shade control system, and a dynamic glazing control system.

In some examples, the time of day input may indicate whether it is day or night. In other examples, the time of day input may indicate whether it is morning, afternoon, or night. In yet further examples, the time of day input may provide an indication of the time of day (i.e., the hour, the minute, etc.).

In some examples, the glare condition input may be a "presence" input or "absence" input, indicating the presence or absence of glare, respectively

In some examples, the HVAC operating mode may be a "heating" input or a "cooling" input, indicating whether the HVAC system is presently heating or cooling the building, respectively.

In some examples, the occupancy status may be an "occupied" input or a "vacant" input, indicating whether the building, or a room in the building, is occupied or vacant.

In some examples, the building management system may further receive information relating to any one or combination of geographic location, weather forecasts, climate, an orientation of the one or more windows in relation to sunlight at a particular time of day, a presence or absence of neighboring buildings, and shadows cast by nearby obstructions. With regard to the information relating to climate, this information may be historical data.

In some examples, the building management system may receive information from any one or combination of day light sensors and temperature sensors. The temperature sensors may be in an external environment, in a room in which at least one window is located, or both.

Another aspect of the present disclosure provides a process for controlling the environmental settings of a controlled space, which may be any of a building, an automobile, watercraft, aircraft, or other vehicle. The process may include: providing a management system capable of controlling one or more electrochromic devices and least one of (a) one or more automated window shades and (b) one or more dimmable electric lights; receiving, at the management system, a plurality of inputs related to (a) a time of day, (b) an occupancy status of the controlled space, (c) a presence of a glare condition, and (d) an operating mode of an HVAC system of the controlled space; and controlling, at the management system, the status of at least one of the window shades, the lights and the electrochromic device based on at least one of the plurality of inputs.

### BRIEF DESCRIPTION OF THE DRAWINGS

FIG. 1 is a functional diagram of a building management system in accordance with an aspect of the present disclosure.
FIG. 2 is a functional diagram of a dynamic façade system including the building management system of claim 1 in accordance with an aspect of the present disclosure.
FIG. 3 is a table depicting a method of operation of the building management system of FIG. 1 in accordance with an aspect of the present disclosure.
FIG. 4 is a flow chart depicting another method of operation of the building management system of FIG. 1 in accordance with an aspect of the present disclosure.
FIG. 5 is another flow chart depicting a method of operation of a controlled space management system in accordance with an aspect of the present disclosure.

### DETAILED DESCRIPTION

The present disclosure provides a process that allows for dynamic control of the façade of a structure (such as a building) in order to control environmental aspects of the structure.

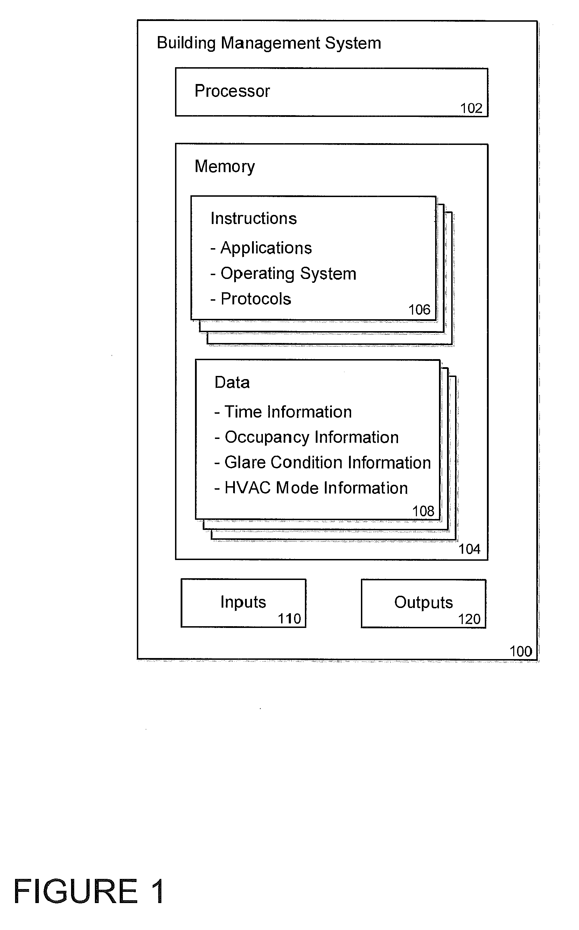

FIG. 1 is a functional diagram of a building management system 100 that may be used to control the dynamic façade system disclosed herein in accordance with method steps described below. For example, and as described in greater detail below, the building management system 100 may be any one or more of a lighting control system, a window shade control system, and a dynamic glazing control system. As shown, the building management system 100 ("BMS") contains a processor 102, and memory or computer readable medium 104.

Memory 104 stores information accessible by the processor 102, including instructions 106 that may be executed by the processor 102 and data 108 that may be retrieved, manipulated or stored by the processor 102. The memory 104 may be of any type capable of storing information accessible by the processor, such as a hard-drive, ROM, RAM, CD-ROM, DVD, Blu-Ray disk, flash memories, write-capable or read-only memories. The processor 102 may comprise any number of well known processors, such as processors from Intel Corporation and Advanced Micro Devices. Alternatively, the processor 102 may be a dedicated controller for executing operations, such as an application-specific integrated circuit (ASIC).

The instructions 106 may comprise any set of instructions to be executed directly (such as machine code) or indirectly (such as scripts) by the processor. In that regard, the terms "instructions," "applications" and "programs" are used interchangeably herein. The instructions may be stored in any computer language or format, such as in executable/object code or modules of source code.

Data 108 may be retrieved, stored or modified by processor 102 in accordance with the instructions 106. The data 108 may be stored as a collection of data. For instance, although the invention is not limited by any particular data structure, the data may be stored in computer registers, in a relational database as a table having a plurality of different fields and records, XML documents, or flat files.

The data 108 may also be formatted in any computer readable format such as, but not limited to, binary values, ASCII etc. Similarly, the data may include images stored in a variety of formats. Moreover, the data may include any information sufficient to identify the relevant information, such as descriptive text, proprietary codes, pointers, references to data stored in other memories (including other locations in a network) or information which is used by a function to calculate the relevant data.

The data 108 may include time information pertaining to a then present time of day. The time information may be useful for determining whether it is daytime or nighttime, which itself may be useful in determining whether it is sunny or dark outside of the structure and/or whether the structure is presently occupied (e.g., a commercial building occupied only during daytime hours). On some examples the time of day information may provide a greater level of detail, such as whether it is morning, afternoon, or night, or the precise time of day. Such information may be useful in creating customizable protocols for control of the dynamic façade system, such as based on specific user preferences correlated to specific periods of times or hours of the day.

The data 108 may also include occupancy information pertaining to whether the controlled space is occupied or vacant. The occupancy information may be useful in determining whether there are any occupants who would find the environmental properties of the controlled space to be uncomfortable (e.g., due to glare, hot temperatures, cold temperatures, excess daylight, darkness, etc.).

The data 108 may further include glare condition information pertaining to whether or not any portion of the controlled space is receiving direct glare. Generally, the glare condition is indicative of solar glare. In some examples, the glare condition is further indicative of glare coming from other sources, such as from a streetlight. The glare condition information may be useful for determining whether such glare must be blocked in the controlled space in order to make the space more comfortable for occupants.

The data 108 may yet further include information pertaining to a then-present mode of operation in a heating, ventilation, and air-conditioning (HVAC) system associated with the controlled structure, such as whether the HVAC system is in a heating mode or a cooling mode. The HVAC mode information may be useful for determining whether an occupant of the controlled space desires to heat or cool the space.

Although the processor 102 and memory 104 are functionally illustrated in FIG. 1 as being within the same block 100, it will be understood that the processor and memory may actually comprise multiple processors and memories that may or may not be stored within the same physical housing or location. For example, some or all of the instructions and data may be stored on a computer-readable removable recording medium such as a CD-ROM, DVD or Blu-Ray disk. Alternatively, such information may be stored within a read-only computer chip. Some or all of the instructions and data may be stored in a location physically remote from, yet still accessible by, the processor. Similarly, the processor may actually comprise a collection of processors which may or may not operate in parallel. Data may be distributed and stored across multiple memories 104 such as hard drives, data centers, server farms or the like.

In addition, the instructions 106 of the memory 104 may include one or more applications or programs adapted to provide any of the functions described herein with respect to the BMS 100 and in accordance with the various aspects of the invention. Each device may include and execute specific instructions or applications, desirably under management of the processor 102 in conjunction with an operating system and protocols instructions to provide the functionality described herein.

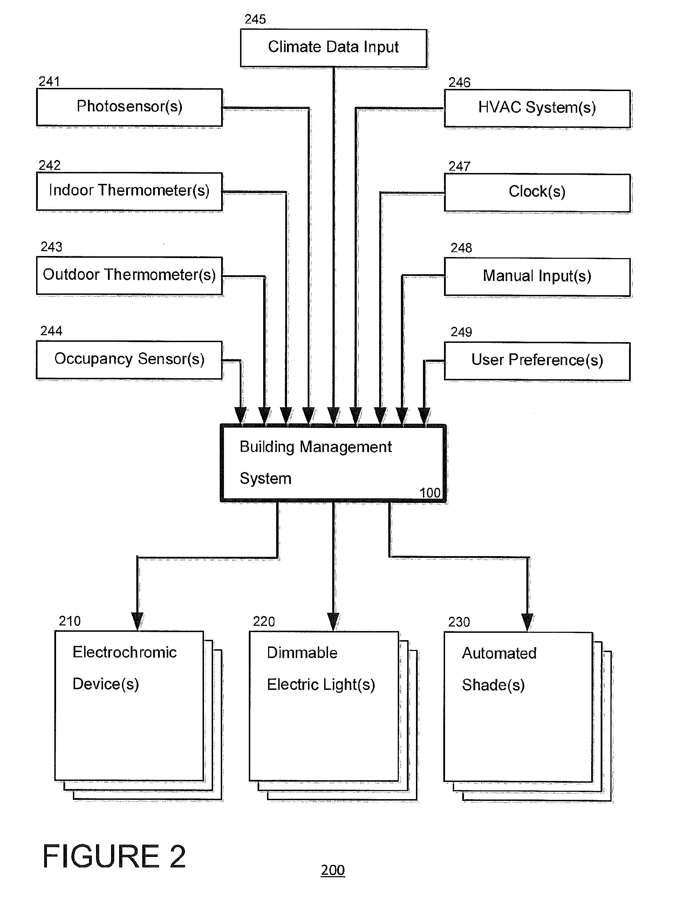

The BMS 100 further includes one or more input devices 110, such as electrical wires (for carrying electronic data inputs), and pen-inputs, joysticks, buttons, touch screens, etc., (for receiving manual inputs). The inputs may be received from a user, sensors included in the dynamic façade system, or both. Various inputs are described in greater detail below with reference to FIG. 2. The BMS 100 may further include one or more outputs 120, including electrical wires or cables (for transmitting instructions to controllable components of the dynamic façade system) and/or displays (for displaying information about the system). The outputs are also described in greater detail below with reference to FIG. 2.

FIG. 2 illustrates an example dynamic façade system 200 including and operated using the BMS 100 of FIG. 1. In the example dynamic façade system 200 of FIG. 2, the BMS 100 is configured to control several dynamic glazing control systems and/or lighting control systems of the dynamic façade system 200, such as one or more electrochromic (EC) devices 210 (such as the SageGlass® electrochromic windows from SAGE Electrochromics, Inc.), one or more dimmable electric lights 220, and one or more automated shades 230 (such as those used in the Quantum® system designed by Lutron Electronics Co., Inc.).

Also, as part of the dynamic façade system 200, sensors and other inputs may be used to help the system define or determine the various data parameters 108 shown in FIG. 1. These sensors may include, but are not limited to, the sensors shown in FIG. 2, such as one or more photosensors 241, one or more indoor temperature sensors 242, one or more outdoor temperature sensors 243, one or more occupancy sensors 244, one or more climate data inputs 245, one or more HVAC systems 246 and/or one or more clocks 247. Aside from sensors, information may come from manually input data at the time of manufacture or installation 248, and/or one or more user interfaces 249.

The one or more photosensors 241 may be configured to sense illuminance (e.g., an amount of daylight in the controlled space) and/or glare (e.g., an amount of saturation to pixels of the photosensors). In some examples, a single photosensor may be positioned within the controlled space, and may provide a measured illuminance and/or glare for at least a portion of the controlled space. In such examples, the measured portion of the space may be considered representative of the entire space. In other examples, one or more photosensors may be stationed throughout the space. Each sensor may collect information regarding the illuminance and/or glare of its respective portion of the space. The illuminance measured by each sensor may then be combined to yield a measurement of the overall illuminance of the space. In one example, the illuminance measured by each of the daylight sensors may be averaged to yield an average illuminance of the space. In another example, the illuminance measured by each of the daylight sensors may be assigned a weight (e.g., assigning a greater weight to a measurement taken by a sensor in the center of the space than to a measurement taken by a sensor in a corner of the space), and then combined to yield a weighted average illuminance of the space. Such readings may be indicative of the time of day (more daylight during daylight hours) and whether there is glare in the controlled space, as well as which portions of the controlled space is affected by the glare when multiple photosensors are positioned throughout the space).

As with the one or more daylight sensors, the one or more indoor temperature sensors 242 may be positioned strategically within or about the controlled space (e.g., within the same room in which one of the building's windows equipped with an automated shade or EC device is located) and may take a single read, averaged read, or weighted average read of the temperature of the controlled space. Such readings may be indicative of whether the HVAC system is in a heating or cooling mode. The one or more outdoor temperature sensors 243 may be positioned in an environment external to the controlled space (outside a building, on the side of the controlled façade opposite the controlled space, etc.) and may indicate the time of day (higher temperatures during daylight hours).

The one or more occupancy sensors 244, such as motion detectors and noise detectors, may be positioned around the controlled space to give an indication of whether the space is occupied by one or more users. Such information may be indicative not only of the occupancy of the space, but also of a time of day, such as in spaces that are more often occupied during daylight hours (e.g., commercial buildings) or nighttime hours (e.g., hotel rooms).

The climate data inputs 245 may be weather broadcasting devices, such as satellites or antennae, and may provide to the BMS 100 such information as weather forecasts and/or other climate data such as historical weather data (e.g., for analog forecasting). Inputs from such devices may be useful, along with any temperature readings, in determining an ideal or proper mode of operation for the associated HVAC system or systems. Inputs from those devices may also be useful in determining the presence or absence of glare conditions (e.g., an indication of cloudy weather negating the possibility of glare conditions). Of course, the HVAC system 246 itself can provide an input indicating the actual then-present mode of operation for the HVAC system (e.g., heating mode, cooling mode)

An astronomic time clock 247 may be used to determine sunrise and sunset (e.g., comparing the present time to known geographic information). Such information could also be used to determine whether it is daytime, nighttime, or time preselected periods of the day, or even the exact time (i.e., hour and minute).

The manually input data 248 may indicate such information as the geographic location and/or orientation of the controlled space's windows in relation to sunlight at a particular time of day. Such information may be useful for determining whether or not direct sunlight is incident on a given location of the controlled space or façade of the structure (based on, for example, formulae published in the IES Lighting Handbook for determining the location of the Sun in the sky). The manually input data 248 may also indicate local knowledge of obstructions (which may be determined from commissioning), such as the presence or absence of neighboring buildings, or shadows cast by nearby obstructions, and may also be helpful for determining the presence of incident sunlight in any given space.

Lastly, the user interface 249 may provide any of the above information on a regular, semi-regular, or sporadic basis. Additionally, the user interface may enable a user to program specific applications or protocols for controlling the dynamic façade system 200, or to override current applications or protocols. Examples of user interfaces are listed above in connection with the inputs 110 of the BMS 100 described in greater detail in connection with FIG. 1.

Based on the above inputs, the BMS 100 may determine particular states or values for each of the time information, occupancy information, glare condition information, and HVAC mode information. Those four pieces of data may then be used to determine a proper mode of operation for each of the one or more electrochromic devices 210, the one or more dimmable electric lights 220, and the one or more automated shades 230.

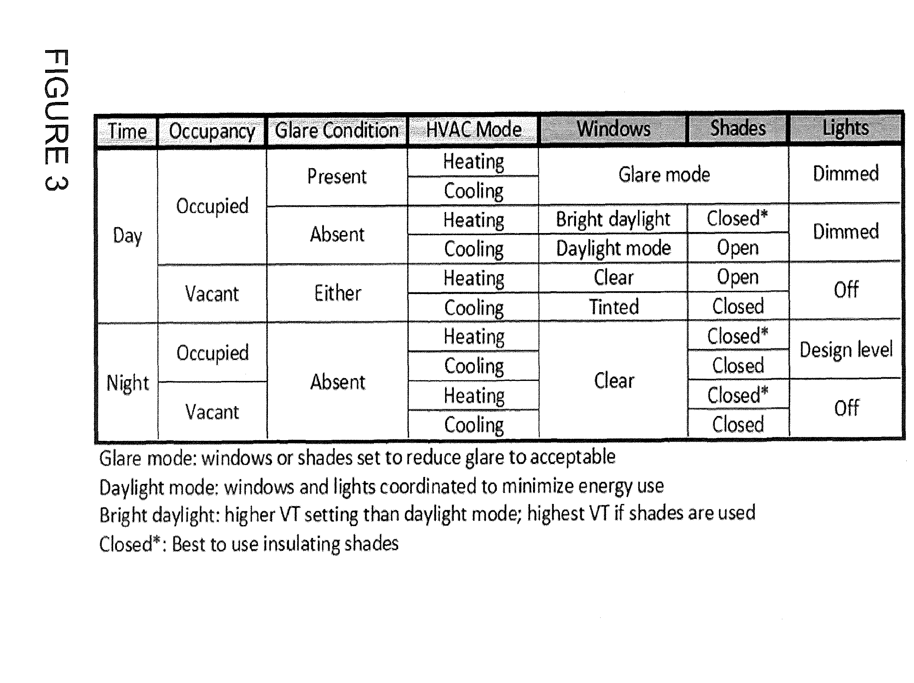

FIG. 3 is a table depicting an example of the sequential logic employed in determining the proper operating mode of each of the EC devices, lights and shades (a "façade management protocol"). As shown in FIG. 3, the time information may be chosen from one of "day" and "night" (indicating whether the then-current time is during daylight or nighttime), the occupancy information may be chosen from one of "occupied" and "vacant" (indicating whether the controlled space is occupied or vacant), the glare condition information may be chosen from one of "present" or "absent" (indicating whether or not direct sunlight is present in any portion of the controlled space), and the HVAC mode information may be selected from "heating" and "cooling" (indicating whether the HVAC system is presently operative to heat or cool the controlled space). Based on the selected pieces of information, the EC devices 210 may be set to any one of a glare mode (in which the EC devices are set so as to reduce the amount of glare in the controlled space, such as tinting or partially tinting EC devices installed in windows known to admit glare at certain times of day), a daylight mode (in which the EC devices are set to a transmissivity that minimizes total energy use of the EC devices and lights), a bright daylight mode (which operates like the daylight mode, except so as to fully bleach the EC devices when the shades are closed), a clear mode (highest transmissivity of the EC device) and a tinted mode (lowest transmissivity of the EC device). Also, based on the selected pieces of information, the lights 220 may be set to any of a dimmed mode (in which the lights are set so as to minimize total energy use of the EC devices and lights), turned off, or a design level mode (in which the lights are turned on). Further, based on the selected pieces of information, the shades 230 may be set to any one of a glare mode (in which the shades are set so as to reduce the amount of glare in the controlled space, such as closing or partially certain shades over windows known to admit glare at certain times of day), a closed mode, or an open mode. In those dynamic façade systems using insulating shades, the BMS 100 may determine whether to close a standard shade or an insulating shade, often depending on whether the HVAC system is in a heating or a cooling mode.

For each possible combination of time, glare, occupancy and HVAC information, FIG. 3 illustrates the particular façade settings yielded by such combination. It will be noted that in some situations, a particular piece of information is irrelevant or unneeded to determine the proper operation of the façade components 210, 220 and 230. For instance, if it determined that the time is "day" and the occupancy is "vacant," the façade components 210, 220 and 230 may be operated the same regardless of whether or not there is a glare condition. In some examples, the glare condition information may be treated as irrelevant when the time information indicates that it is nighttime.

Operations in accordance with aspects of the disclosure will now be described with reference to the figures. It should be understood that the following operations do not have to be performed in the precise order described below. Rather, various operations can be handled in a different order or simultaneously. It should also be understood that these operations do not have to be performed all at once. For instance, some operations may be performed separately from other operations.

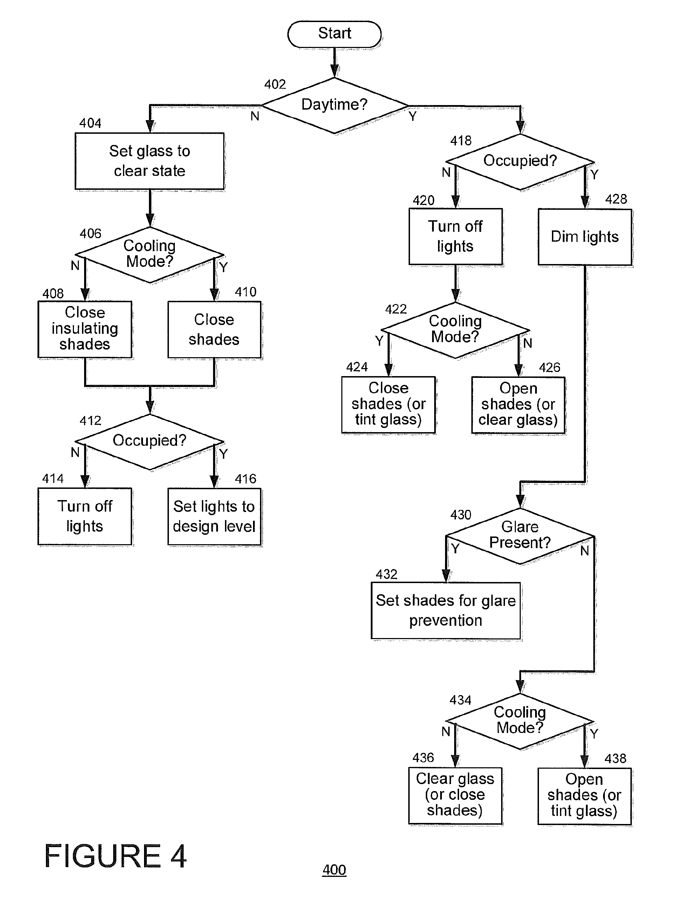

FIG. 4 is a flow diagram corresponding to the table of FIG. 3 and depicting the sequence of decisions made in order to execute a dynamic façade management protocol. Flow diagrams other than that shown in FIG. 4, as well as small variations to the flow diagram of FIG. 4, are possible based on differing user preferences. User preferences are vital for determining aspects of the BMS 100 outputs such as the tinting of an EC device, position of an automated shade, illuminance or output of an electric light during the day. User inputs may also provide valuable input information to the BMS 100, such as when indicating that the controlled space is occupied, indicating that direct sun glare (or excessive sky glare) is or is not present, and indicating when the HVAC system is in heating or a cooling mode. Thus, a wide range of system configurations may be acceptable based on visual and thermal comfort considerations and individual preferences.

In the example of FIG. 4, the façade management protocol may begin in block 402 with the BMS determining the time of day. If it is determined that it is not daytime (denoted "N" in FIG. 4), then in block 404 the BMS may set the glass of the EC device to a clear state. The protocol then continues in block 406, in which the BMS determines whether the HVAC system is in a cooling mode. If it is determined that the HVAC system is not in a cooling mode (denoted "N"), then in block 408, the BMS may set the insulating shades (if there are insulating shades) of the system to be closed. If it is determined that the HVAC system is in a cooling mode (denoted "Y"), then in block 410, the BMS may set the shades (regular shades, if there is no option for insulating shades) of the system to be closed. In either case, the protocol then continues in block 412, in which the BMS determines whether the controlled space is occupied. If it is determined that the controlled space is not occupied ("N"), then in block 414 the BMS turns off the lights. If it is determined that the controlled space is occupied ("Y"), then in block 416 the BMS sets the lights to the design level.

Returning to block 402, if it is determined that it is daytime (denoted "Y"), then in block 418 the BMS may next determine whether the controlled space is occupied. If it is determined that the controlled space is not occupied ("N"), then in block 420 the BMS may turn the lights off. The protocol then continues in block 422, in which the BMS determines whether the HVAC system is in a cooling mode. If it is determined that the HVAC system is in a cooling mode ("Y"), then in block 424 the BMS may set the shades of the system to be closed. Alternatively, or additionally, the BMS may set the EC device to a low transmissivity level (i.e., tint the EC glass). If it is determined that the HVAC system is not in a cooling mode ("N"), then in block 426 the BMS may set the shades to be open. Alternatively, or additionally, the BMS may set the EC device to a high transmissivity level (i.e., bleach the EC glass).

Returning to block 418, if it is determined that the controlled space is occupied ("Y"), then in block 428 the BMS may dim the lights, such as according to daylight conditions (e.g., minimizing energy expenditure of the system) or user preferences. The protocol then continues in block 430, in which the BMS determines whether there is glare present in the controlled space. If it is determined that there is glare present in the controlled space, then in block 432 the BMS may set the shades of the system for glare prevention, which may involve closing all or some of the shade all or part of the way so as to prevent glare in the controlled space. If it is determined that there is no glare present in the controlled space, then the protocol continues in block 434, in which the BMS determines whether the HVAC system is in a cooling mode. If it is determined that the HVAC system is in a cooling mode ("Y"), then in block 436 the BMS may set the shades of the system to be open. Alternatively, or additionally, the BMS may set the EC device and lights in a manner that minimizes total energy use of the system. If it is determined that the HVAC system is not in a cooling mode ("N"), then in block 438 the BMS may set the shades to be closed, preferably using light diffusing or insulating shades. Alternatively, or additionally, the BMS may set the EC device to a high transmissivity level (i.e., bleach the EC glass).

In the example protocol 400 of FIG. 4, each of the plurality of inputs is determined by the building management system, and the time of day input influences the control of the façade components based on the other inputs. In other words, the manner in which the remaining information (i.e., the information relating to an occupancy status of the building, a presence of a glare condition, and an operating mode of an HVAC system of the building) influences controlling the façade components is itself based at least partially on the outcome of the time of day information determination.

One benefit of determining the influence of the other inputs based on the determination of the time of day information is that, depending on the outcome of the time of day determination, some other determinations may not need to be made at all. For example, if it is determined that it is nighttime, and if the only glare being detected is solar glare, then the presence of solar glare need not be determined by the BMS, or at least the façade components not be controlled based on such a determination. Similar benefits may be yielded from determining the occupancy information first, and may apply for all types of glare, since glare is only an issue if the controlled space is occupied. In other example protocols, the occupancy information may be determined before the time information, such that the manner in which the time information affects control of the façade components depends at least partially on the determination of the occupancy information.

Also in the example protocol 400 of FIG. 4, when the time of day is determined to be daytime, the BMS's determination of the occupancy information may at least partially influence the manner in which the façade components are controlled based on the determined operating mode of an HVAC system. In such examples, the façade components may be controlled based on the occupancy information first (e.g., even before a determination is made regarding the HVAC mode). One benefit of controlling the façade components based on the occupancy information first is that the lights may be set (e.g., dimmed, turned off) even before a determination is made regarding the HVAC system's present mode of operation. Conversely, the BMS may determine control of the façade components based on the occupancy information after the operating mode of an HVAC system when the time of day is determined to be nighttime. The benefit of such control is that the shades of the building may be set even before a determination is made regarding the occupancy of the building.

The above examples of the present disclosure describe control of a dynamic façade system having all three of one or more electrochromic devices 210, the one or more dimmable electric lights 220, and the one or more automated shades 230. In some systems, the BMS 100 may control at least two of the three aforementioned controllable components 210, 220, and 230 using the above described inputs. In some examples, the BMS 100 may control one or more EC devices 210 and one of the other two controllable components 220 and 230.

While many of the above examples of the present disclosure describe a process for controlling features of a dynamic façade in order to control environmental aspects of a building, it will be recognized that the same processes and underlying principles may be applied to any façade system so as to control environmental aspects of any controlled space. For instance, the windows, shades, and lighting of an automobile, boat, aircraft, or other vehicle may be controlled in the same or similar manner as described above. It will further be recognized that the same processes and principles may be applied even to control environmental aspects of open-air or outdoor spaces. For instance, properties of a wall or façade adjacent to an outdoor park may be dynamically adjusted to regulate glare or temperature in the park.

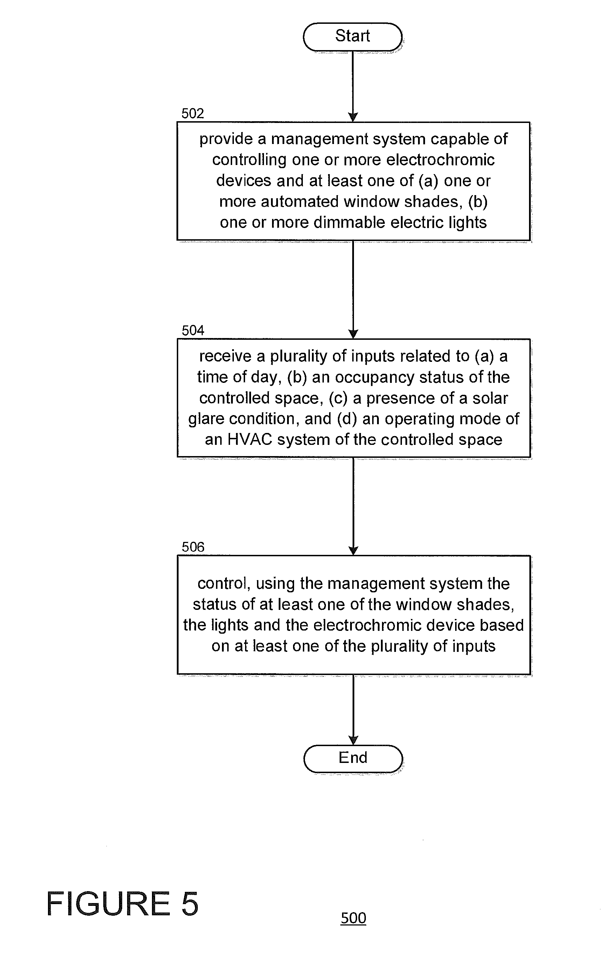

FIG. 5 is a flow chart depicting a process 500 for controlling the environmental settings of a controlled space, such as a building. In block 502 a management system (which may be a building management system in the case of a building, or other systems with similar capabilities in the case of other controlled spaces) capable of controlling each of (a) one or more automated window shades, (b) one or more dimmable electric lights, and (c) one or more electrochromic devices is provided. In some examples, the management system may be capable of controlling one or more electrochromic devices as well as at least one of (a) one or more automated window shades, (b) one or more dimmable electric lights. In block 504, the management system receives a plurality of inputs related to (a) a time of day, (b) an occupancy status of the controlled space, (c) a presence of a glare condition, and (d) an operating mode of an HVAC system of the controlled space. Lastly, in block 506, the management system controls the status of at least one of the window shades, the lights and the electrochromic devices based on at least one of the plurality of inputs.

An embodiment provides for a process for controlling the environmental settings of a building, including: providing a building management system (100) capable of controlling one or more electrochromic devices (210) at least one of (a) one or more automated window shades (230), and (b) one or more dimmable electric lights (220); receiving, at the building management system, a plurality of inputs related to (a) a time of day, (b) an occupancy status of the building, (c) a presence of a glare condition, and (d) an operating mode of an HVAC system of the building; and controlling, at the building management system, the status of at least one of the window shades, the lights and the electrochromic devices based on at least one of the plurality of inputs.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A process for controlling the environmental settings of a building having one or more windows, said process comprising:
providing a building management system capable of controlling one or more electrochromic devices associated with the one or more windows and at least one of (a) one or more automated window shades associated with the one or more windows, and (b) one or more dimmable electric lights;
receiving, at the building management system, a plurality of inputs related to (a) a time of day, (b) an occupancy status of the building, (c) a presence of a glare condition, and (d) an operating mode of an HVAC system of the building; and
controlling, at the building management system, the status of at least one of the window shades, the lights and the electrochromic device based on at least one of the plurality of inputs.

2. The process of claim 1, wherein controlling the status of at least one of the window shades, the lights and the electrochromic device based on at least one of the inputs relating to an occupancy status of the building, a presence of a glare condition and an operating mode of an HVAC system of the building is at least partially influenced by the determination of the time of day input.

3. The process of claim 2, wherein the status of at least one of the window shades, the lights and the electrochromic device is not controlled based on the input relating to the presence of a glare condition when the building management system determines that the time of day is nighttime.

4. The process of claim 2 or 3, wherein the status of at least one of the window shades, the lights and the electrochromic device is not controlled based on the input relating to the presence of a glare condition when the building management system determines that the occupancy status is vacant.

5. The process of any of claims 2 to 4, wherein controlling the status of at least one of the window shades, the lights and the electrochromic device based on the input relating to an operating mode of an HVAC system of the building is at least partially influenced by the determination of the input relating to occupancy status of the building only when the time of day input indicates that the time of day is daytime.

6. The process of any of claims 2 to 4, wherein controlling the status of at least one of the window shades, the lights and the electrochromic device based on the input relating to an occupancy status of the building is not influenced by the determination of the input relating to HVAC system of the building only when the time of day input indicates that the time of day is nighttime.

7. The process of any preceding claim, wherein the building management system comprises at least one of a lighting control system, a window shade control system, and a dynamic glazing control system.

8. The process of any preceding claim, wherein the time of day input is selected from one of a day input and a night input, the solar glare condition input is selected from one of a present input or an absent input, the HVAC operating mode input is selected from one of a heating input and a cooling input, and the occupancy status input is selected from one of an occupied input and a vacant input.

9. The process of any preceding claim, wherein the time of day input is selected from one of a morning input, an afternoon input, and a night input.

10. The process of any preceding claim, wherein the building management system further receives information relating to at least one of a geographic location of the building, weather forecasts, and historical weather data.

11. The process of any preceding claim, wherein the building management system further receives information relating to at least one of an orientation of the one or more windows in relation to sunlight at a particular time of day, a presence or absence of neighboring buildings, and shadows cast by nearby obstructions.

12. The process of any preceding claim, wherein the building management system further receives information from one or more day light sensors.

13. The process of any preceding claim, wherein the building management system further receives information from at least one of a temperature sensor in an external environment and a temperature sensor located in the same room as which at least one window is located.

14. A process for controlling the environmental settings of a controlled space, said process comprising:
providing a management system capable of controlling one or more electrochromic devices and least one of (a) one or more automated window shades and (b) one or more dimmable electric lights;
receiving, at the management system, a plurality of inputs related to (a) a time of day, (b) an occupancy status of the building, (c) a presence of a solar glare condition, and (d) an operating mode of an HVAC system of the controlled space; and
controlling, at the management system, the status of at least one of the window shades, the lights and the electrochromic device based on at least one of the plurality of inputs.

15. The process of claim 14, wherein the controlled space is one of a building, automobile, watercraft, or aircraft.
